# FASCICULE DE BREVET EUROPEEN

(11) **EP 2 301 844 B1**
(45) Date de publication et mention de la délivrance du brevet: **21.11.2012**
(21) Numéro de dépôt: 10007617.3
(22) Date de dépôt: 22.07.2010
(51) Int. Cl.: B64D 31/14, B64D 43/00, B64C 27/04, B64D 31/00, F02C 9/26

(54) **Procédé et dispositif d'aide au pilotage d'un aéronef en cas de pannes d'un indicateur de première limitation**
Verfahren und Vorrichtung zur Steuerungshilfe eines Flugzeuges im Störungsfall eines Instruments für die erste Begrenzung
Method and device for aiding piloting an aircraft in case of failure of a first limitation indicator

(30) Priorité: 23.09.2009 FR 0904541
(43) Date de publication de la demande: 30.03.2011
(73) Titulaire: EUROCOPTER, 13725 Marignane Cédex (FR)
(72) Inventeur: Chaniot, Daniel, 13700 Marignane (FR); Voinchet, Olivier, 13960 Sausset (FR); Gaulmin, Francois-Xavier, 13300 Salon de Provence (FR)
(74) Mandataire: GPI & Associés

(56) Documents cités:
- EP-A1- 0 816 226
- US-A- 6 150 959
- US-A1- 2008 275 597

## Description

La présente invention concerne un procédé et un dispositif d'aide au pilotage d'un giravion muni d'au moins deux moteurs en cas de panne d'un indicateur de première limitation. Des exemples de l'art antérieur sont favoris par le documents US 6150959, US 2008/0275597 et FR 2749545.

Plus particulièrement, le pilotage d'un hélicoptère s'effectue grâce à la surveillance de nombreux instruments sur le tableau de bord, instruments qui sont pour la plupart représentatifs du fonctionnement de l'installation motrice et de l'aéronef. Pour des raisons physiques, il existe de nombreuses limitations que le pilote doit prendre en compte à chaque instant de vol. Ces différentes limitations dépendent généralement de la phase de vol et des conditions extérieures.

La plupart des hélicoptères construits actuellement sont équipés d'une installation motrice possédant un ou deux turbomoteurs à turbine libre. La puissance est alors prélevée sur un étage basse pression de la turbine libre, lequel étage est mécaniquement indépendant de l'ensemble du compresseur et de l'étage haute pression du turbomoteur. La turbine libre d'un turbomoteur tournant entre 20 000 et 50 000 tours par minute, une boîte de réduction de vitesse est nécessaire pour la liaison au rotor principal dont le régime de rotation est sensiblement compris entre 200 et 400 tours par minute: il s'agit de la boîte de transmission principale de puissance.

Les limitations thermiques du turbomoteur et les limitations en couple de la boîte de transmission principale permettent de définir trois régimes normaux d'utilisation du turbomoteur:
- le régime de décollage, utilisable pendant cinq à dix minutes, correspondant à un niveau de couple pour la boîte de transmission principale et un échauffement du turbomoteur admissibles pendant un temps limité sans dégradation notable : c'est la puissance maximale au décollage (PMD),
- le régime maximal continu pendant lequel, à aucun moment, ne sont dépassées les possibilités de la boîte de transmission principale, ni celles résultant de l'échauffement maximal admissible en continu devant les aubages à haute pression du premier étage de la turbine : c'est la puissance maximale en continu (PMC),
- le régime maximal en transitoire, buté ou non par la régulation : on parle alors de puissance maximale en transitoire (PMT).

Il existe aussi des régimes de surpuissance en urgence sur les appareils mufti-moteurs, utilisés en cas de panne d'un turbomoteur:
- le premier régime d'urgence pendant lequel les possibilités de la boîte de transmission principale sur les étages d'entrée et les possibilités thermiques du turbomoteur sont utilisées au maximum : on parle de puissance de super urgence (PSU) utilisable pendant trente secondes consécutives, au maximum, et trois fois pendant un vol. L'utilisation de la PSU entraîne la dépose et la révision du turbomoteur;
- le deuxième régime d'urgence pendant lequel les possibilités de la boîte de transmission principale sur les étages d'entrée et les possibilités du turbomoteur sont largement utilisées : on parle alors de puissance maximale d'urgence (PMU) utilisable pendant deux minutes après la PSU ou deux minutes trente secondes consécutives, au maximum ;
- le troisième régime d'urgence pendant lequel les possibilités de la boîte de transmission principale sur les étages d'entrée et les possibilités thermiques du turbomoteur sont utilisées sans endommagement : on parle de puissance intermédiaire d'urgence (PIU) utilisable trente minutes ou en continu pour le reste du vol après la panne du turbomoteur.

Les limitations indiquées sont généralement surveillées par l'intermédiaire des trois paramètres : le régime du générateur de gaz, le couple moteur et la température d'éjection des gaz à l'entrée de turbine libre respectivement dénommés Ng, Cm et T4 par l'homme du métier.

Pour chaque régime, le constructeur définit des seuils en dessous desquels les paramètres de surveillance doivent être maintenus.

Le pilote doit alors surveiller ces paramètres de surveillance pour s'assurer qu'il ne dépasse pas le seuil défini pour le régime utilisé. Cette surveillance est d'autant plus délicate pour un hélicoptère muni d'au moins deux moteurs dans la mesure où il convient d'utiliser trois cadrans distincts par moteur.

Par ailleurs, les turbomoteurs de dernières générations sont contrôlés et régulés par un organe de contrôle et de régulation muni d'un calculateur électronique de régulation, dénommé FADEC par l'homme du métier, qui détermine notamment la position du doseur carburant en fonction d'une part d'une boucle de régulation comportant une boucle primaire basée sur le maintien de la vitesse de rotation du rotor de sustentation du giravion, et d'autre part d'une boucle secondaire basée sur une valeur de consigne du paramètre de pilotage.

Un organe de régulation FADEC reçoit de plus des signaux relatifs d'une part aux paramètres de surveillance du turbomoteur qu'il commande, et, d'autre part à des paramètres de surveillance d'organes importants du giravion tels que la vitesse de rotation du rotor de sustentation par exemple.

L'organe de régulation FADEC transmet alors les valeurs des paramètres de surveillance à un indicateur de première limitation agencé dans le cockpit du giravion.

On connaît, par le document FR2749545 notamment, un indicateur de première limitation qui identifie, parmi les paramètres de surveillance du turbomoteur, celui qui est le plus proche de sa limite. Les informations relatives aux limitations à respecter sont ainsi regroupées sur un affichage unique, en permettant, d'une part, d'effectuer une synthèse et de présenter uniquement le résultat de cette synthèse afin de simplifier la tâche du pilote et, d'autre part, de gagner de la place sur la planche de bord. On obtient ainsi un « paramètre limitant », parmi lesdits paramètres de surveillance du turbomoteur, dont la valeur actuelle est la plus proche de la valeur limite pour ledit paramètre. Pour cette raison, on désigne un tel indicateur par l'expression « instrument de première limitation », en abrégé « IPL ».

Cet indicateur de première limitation permet donc de connaître la valeur actuelle à un instant donné du paramètre limitant. La charge de travail du pilote est considérablement diminuée puisqu'il se contente désormais d'utiliser un instrument de mesure, et non plus six pour un hélicoptère bimoteur.

Cet indicateur de première limitation est parfois affiché sur un premier écran d'un premier équipement d'un système d'affichage central, ce premier équipement étant dénommé « VEMD » soit « Vehicle Engine Multifunction Display » en langue anglaise.

De plus, ce premier équipement est à même d'afficher sur un deuxième écran, la température et la pression de l'huile du ou des turbomoteurs, la température et la pression de l'huile d'une boîte de transmission principale, la tension et l'intensité fournis par un générateur électrique, et la température extérieure.

En cas de panne du premier équipement, une panne de son premier écran par exemple, le pilote ne possède plus d'indicateur de première limitation pour éviter de dépasser les limites imposées par le constructeur.

Il doit donc faire appel à des instruments annexes pour obtenir les valeurs des paramètres de surveillance. Plus précisément, sur un hélicoptère muni de deux turbomoteurs il doit surveiller six indicateurs conventionnels pour surveiller le régime du générateur de gaz, le couple moteur et la température d'éjection des gaz à l'entrée de turbine libre de chaque turbomoteur. En parallèle, le pilote doit consulter son manuel de vol pour déterminer les seuils que chaque paramètre de surveillance ne doit pas dépasser.

Sa charge de travail est de fait augmentée alors que les conditions de vol sont dégradées. Il est alors demandé au pilote d'interrompre sa mission et de réaliser un atterrissage de précaution sans marquer de phase stationnaire. La procédure d'atterrissage peut de fait être délicate si l'hélicoptère doit se poser dans une zone confinée ou sur un navire par exemple.

Par conséquent, pour préserver les moteurs d'un hélicoptère ayant au moins deux turbomoteurs en cas de panne d'un indicateur de première limitation, l'architecture connue impose au pilote d'annuler la mission en cours, et augmente sa charge de travail en requérant l'utilisation d'instruments conventionnels pour ne pas dépasser les seuils donnés par le constructeur.

La présente invention a alors pour objet de réduire la charge de travail d'un pilote d'un giravion muni d'au moins deux moteurs tout en évitant l'annulation de la mission en cours lorsque l'indicateur de première limitation tombe en panne.

Selon l'invention, un procédé d'aide au pilotage d'un aéronef pourvu d'au moins deux moteurs en cas de pannes d'un indicateur de première limitation, une pluralité de paramètres de surveillance des moteurs de l'aéronef étant surveillés et, l'indicateur de première limitation affichant une information relative à une valeur d'un paramètre limitant des moteurs, ce paramètre limitant étant le paramètre de surveillance des moteurs le plus proche de sa limite, est remarquable en ce que l'on active un mode de pilotage assisté durant lequel on maintient chaque paramètre de surveillance en dessous d'un seuil prédéterminé lorsque l'indicateur de première limitation n'est plus à même d'afficher ladite information.

Par conséquent, on réduit l'autorité du pilote sur les moteurs de l'aéronef en réduisant néanmoins sa charge de travail.

Au lieu de consulter son manuel de vol et une multitude de cadrans conventionnels pour s'assurer qu'il ne dépasse pas les limites fixées par le constructeur, le pilote peut au contraire réaliser des tâches annexes, en cherchant un terrain propice à un atterrissage par exemple.

L'état de la technique considère qu'il est inutile d'assister le pilote d'un aéronef pourvu d'une pluralité de moteurs dans sa gestion des limites imposées, ces limites étant suffisamment élevées. Plus particulièrement sur un hélicoptère bimoteur dont les moteurs fonctionnent correctement, on considère qu'il est inutile de plafonner physiquement les performances des moteurs pour les préserver.

A l'opposé des ces préjugés, l'invention propose de maintenir les paramètres de surveillance des moteurs en dessous de seuils prédéterminées, en dessous de la limite imposée par le constructeur pour chacun de ces paramètres, pour faciliter le travail du pilote en cas d'un dysfonctionnement de son indicateur de première limitation. En effet, les pilotes des hélicoptères bimoteur modernes n'étant plus habitués à piloter à l'aide d'instruments conventionnels, ces pilotes peuvent se trouver dans des situations délicates et perturbantes lorsque leur instrument principal à savoir l'indicateur de première limitation ne fonctionne plus.

D'ailleurs, dans ce mode de vol dégradé, on requiert l'interruption de la mission. En mettant en oeuvre l'invention, il n'est plus nécessaire d'interrompre la mission puisque l'on empêche physiquement les moteurs de fonctionner au-delà des limitations imposées sans augmenter la charge de travail du pilote.

Le procédé selon l'invention peut de plus comporter une ou plusieurs des caractéristiques additionnelles qui suivent.

Par exemple, les moteurs étant des turbomoteurs munis d'une turbine libre et d'un générateur de gaz, les paramètres de surveillances comprennent le régime du générateur de gaz de chaque moteur, le couple moteur de chaque moteur et la température d'éjection des gaz à l'entrée de la turbine libre de chaque moteur.

De fait, le pilote n'a pas à surveiller six instruments conventionnels puisque dans tous les cas l'organe de contrôle va empêcher un dépassement des limites imposées, en maintenant les paramètres de surveillance en dessous de leur seuil associé.

En outre, les moteurs pouvant fonctionner selon une pluralité de régimes, on modifie le seuil prédéterminé en fonction du régime employé.

Un hélicoptère bimoteur fonctionne à un régime de décollage en dessous d'une vitesse d'avancement donnée, et à un régime maximal continu au dessus de cette vitesse d'avancement.

Dès lors, un organe de contrôle recevant une donnée relative à ladite vitesse d'avancement via un équipement usuel, cet organe de contrôle fait appel à des seuils dénommés « seuils de décollage » par commodité lorsque le régime de décollage est mis en oeuvre, et à des seuils dénommés « seuils maximaux continus » par commodité lorsque le régime maximal continu est mis en oeuvre.

Avantageusement, on maintient chaque paramètre de surveillance en dessous d'un seuil prédéterminé en plafonnant les paramètres de surveillance. Ainsi, en plafonnant la valeur des paramètres de surveillance, on bute les moteurs pour ne pas dépasser les limites imposées par le constructeur.

Par exemple, on maintient chaque paramètre de surveillance en dessous d'un seuil prédéterminé en plafonnant le débit de carburant alimentant les moteurs. On garantit au pilote que le moteur ne dépassera ses limites imposées lorsque le mode pilotage assisté est activé.

Ce plafonnement peut être introduit via des lois de régulation du débit carburant introduites dans l'organe de régulation FADEC de chaque moteur, ou en plafonnant la position de doseurs carburant.

Par ailleurs, selon une première variante manuelle, un pilote active le mode de pilotage assisté en requérant manuellement le mode de pilotage assisté pendant une durée minimale. A titre d'exemple, l'organe de contrôle active le mode de pilotage assisté si le pilote appuie sur un bouton pendant une durée de quinze secondes.

Cette durée minimale imposée permet d'éviter un enclenchement indu du mode de pilotage assisté.

Selon une deuxième variante automatisée, un organe de contrôle surveillant le fonctionnement de l'indicateur de première limitation, on active automatiquement le mode de pilotage assisté lorsqu'une panne de l'indicateur de première limitation est détectée.

En option, on informe un pilote de l'aéronef lorsque le mode de pilotage assisté est activé, en allumant un voyant par exemple.

Par ailleurs, l'aéronef étant un giravion muni d'au moins un rotor de sustentation animé d'une vitesse de rotation, on désactive le mode de pilotage assisté lorsque ladite vitesse de rotation passe en dessous d'une vitesse limite prédéterminée.

En effet, si les manoeuvres du pilote induisent un abaissement dangereux de la vitesse de rotation du rotor de sustentation, et donc en dessous d'une vitesse limite prédéterminée par le constructeur de manière usuelle, on autorise le pilote à solliciter les moteurs en requérant des performances d'urgence allant au-delà des limites imposées et donc des seuils prédéterminés pour éviter un accident.

Plutôt que de préserver les moteurs, on laisse une autorité maximale au pilote pour sauver son giravion.

De même, l'aéronef étant un giravion muni d'au moins un rotor de sustentation animé d'une vitesse de rotation, on désactive le mode de pilotage assisté lorsque le rotor de sustentation subit une décélération supérieure à une décélération limite prédéterminée.

Si la vitesse de rotation chute trop rapidement, on n'attend donc pas que cette vitesse de rotation passe en dessous d'une vitesse limite prédéterminée pour redonner une pleine autorité au pilote.

Par exemple si le mode de pilotage assisté est activé, à partir d'une certaine position le pilote d'un hélicoptère ne peut plus tirer le levier de pas collectif. En effet, ce levier est alors en butée du fait de la limitation imposée par un organe de contrôle. Par contre, en fonction de la vitesse de rotation du rotor de sustentation ou de la décélération de ce rotor de sustentation, on désactive le mode de pilotage assisté ce qui libère le levier de pas collectif et redonne donc une pleine autorité au pilote.

La présente invention a aussi pour objet un dispositif d'aide au pilotage d'un giravion apte à mettre en oeuvre le procédé précédemment décrit, ce dispositif comportant au moins un indicateur de première limitation, au moins un organe de régulation d'au moins un premier et un deuxième moteurs, un organe de régulation de type FADEC par exemple.

Le dispositif d'aide au pilotage est remarquable en ce qu'il comporte au moins un organe de contrôle apte à maintenir une pluralité de paramètres de surveillance des moteurs en dessous de seuils prédéterminés, en plafonnant éventuellement chaque paramètre de surveillance à un seuil prédéterminé correspondant à une limite imposée par le constructeur.

Le dispositif peut de manière additionnelle comporter une ou plusieurs des caractéristiques suivantes.

Ainsi, le giravion comportant un moyen de commande d'un régime d'urgence quand un moteur est en panne, lorsque les moteurs fonctionnent normalement le moyen de commande permet d'activer un mode de pilotage assisté durant lequel au moins un organe de contrôle maintient une pluralité de paramètres de surveillance desdits moteurs en dessous de seuils prédéterminés.

En effet, l'organe de contrôle est en relation avec l'organe de régulation ce qui lui permet de déterminer que les moteurs fonctionnent correctement. Dès lors, quand le pilote utilise le moyen de commande, l'organe de contrôle en déduit que le pilote ne requiert pas la mise en oeuvre du régime d'urgence mais le plafonnement des paramètres de surveillance des moteurs.

L'organe de contrôle ordonne alors de plafonner par exemple le débit du carburant alimentant les moteurs.

De même, le giravion comportant un premier moyen de commande d'un premier régime d'urgence et un deuxième moyen de commande d'un deuxième régime d'urgence quand un moteur est en panne, lorsque les moteurs fonctionnent normalement le premier moyen de commande permet d'activer un mode de pilotage assisté durant lequel au moins un organe de contrôle maintient une pluralité de paramètres de surveillance des moteurs en dessous de premiers seuils prédéterminés pour un premier régime de fonctionnement normal et le deuxième moyen de commande permet d'activer un mode de pilotage assisté durant lequel au moins un organe de contrôle maintient une pluralité de paramètres de surveillance des moteurs en dessous de deuxièmes seuils prédéterminés pour un deuxième régime de fonctionnement normal.

Selon une réalisation, l'organe de contrôle est intégré à l'organe de régulation. Par exemple, l'organe de contrôle est représenté par un microprocesseur, dédié ou non, d'un organe de régulation FADEC.

Cette solution est très pratique car elle peut être implémentée sur les aéronefs existants sans modification notable.

Selon une autre réalisation, l'organe de contrôle est intégré à l'indicateur de première limitation.

L'invention et ses avantages apparaîtront avec plus de détails dans le cadre de la description qui suit avec des exemples de réalisation donnés à titre illustratif en référence aux figures annexées qui représentent :
- la figure 1, une variante automatisée de l'invention,
- la figure 2, une variante manuelle de l'invention, et
- la figure 3, un manche muni de moyens de commande permettant d'activer le mode de pilotage assisté.

Les éléments présents dans plusieurs figures distinctes sont affectés d'une seule et même référence.

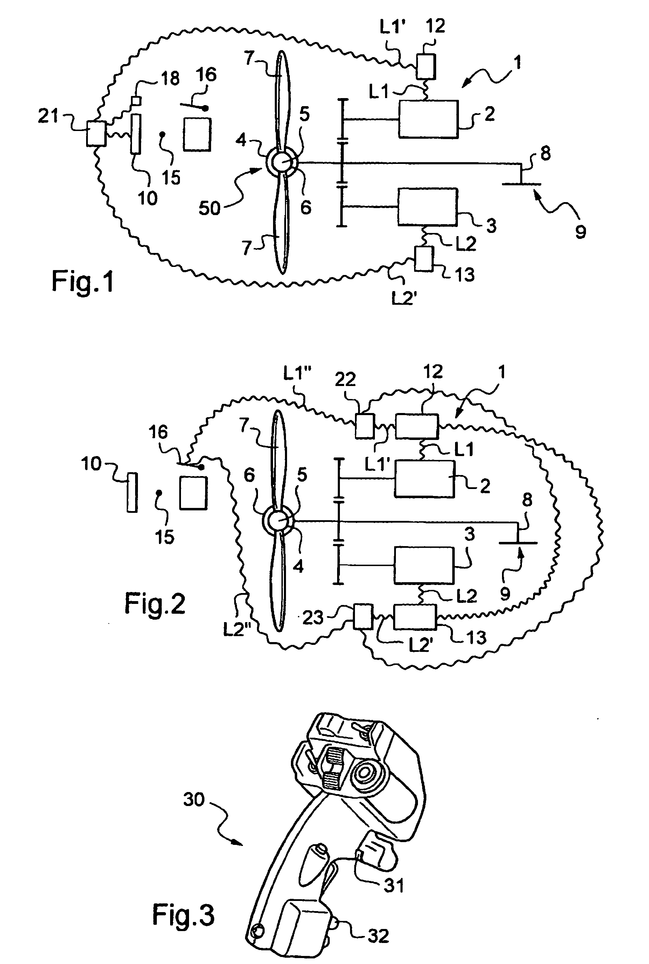

La figure 1 présente un schéma explicitant une variante automatisée de l'invention.

Cette figure 1 montre un aéronef, de type hélicoptère, pourvu d'une installation motrice ayant un premier et un deuxième moteurs 2, 3, notamment des turbomoteurs à turbine libre.

Classiquement, ces premier et deuxième moteurs sont mécaniquement liés à une boîte de transmission principale 4 de puissance apte à mettre en rotation un rotor de sustentation 50 et de propulsion via un mât rotor 5. Le rotor de sustentation 50 est dès lors équipé d'un moyeu 6 solidaire du mât rotor 5 et d'une pluralité de pales 7.

De plus, les premier et deuxième moteurs 2, 3 sont aptes à entraîner un rotor arrière 9 via une boîte de transmission secondaire 8 de puissance, dite arrière de façon conventionnelle.

Les premier et deuxième doseurs carburant des premier et deuxième moteurs 2, 3 sont pilotés respectivement par un premier et un deuxième organes de régulation 12, 13, dénommés FADEC par l'homme du métier. Les premier et deuxième organes de régulation 12, 13 comprennent respectivement un premier et deuxième organes de pilotage, des microprocesseurs par exemple, déterminant la position des premier et deuxième doseurs carburant par l'intermédiaire de boucles de régulation. Ces boucles de régulation visent à maintenir dans une plage prédéfinie la vitesse de rotation NTL de la turbine libre de chaque moteur, et de fait proportionnelle à la vitesse de rotation Nr du rotor de sustentation.

Par suite, les premier et deuxième organes de régulation 12, 13 sont reliés aux premier et deuxième moteurs 2, 3 par des liaison L1, L2 pour contrôler la position des premier et deuxième doseurs carburant et pour recevoir des informations relatives à des paramètres de surveillance des premier et deuxième moteurs 2, 3.

Pour piloter son hélicoptère, le pilote dispose d'un manche cyclique 15 pour piloter les évolutions en tangage et en roulis en permettant de modifier cycliquement le pas des pales 7 du rotor de sustentation 50, d'un palonnier non représenté pour piloter les évolutions en lacet de l'hélicoptère en agissant sur le rotor arrière 9, et d'un levier de pas collectif 16 pour piloter la portance du rotor de sustentation 50 en modifiant collectivement le pas des pales 7 du rotor de sustentation 50 afin de positionner l'hélicoptère à une altitude donnée.

De plus, le pilote dispose d'une pluralité d'indicateurs et notamment un indicateur de première limitation 10 affichant le paramètre de surveillance des moteurs 2, 3 le plus proche de sa limite, dénommé de fait paramètre limitant. Prédéterminée par le constructeur, ladite limite varie d'un paramètre de surveillance à un autre et d'un régime à un autre.

Sur un hélicoptère bimoteur équipé d'un premier et d'un deuxième turbomoteurs, on trouve principalement six paramètres de surveillance :
- un premier et un deuxième régimes du générateur de gaz Ng respectivement des premier et deuxième moteurs 2, 3,
- un premier et un deuxième couples moteur Tq des premier et deuxième moteurs 2, 3, et
- une première et une deuxième températures d'éjection des gaz (T4) à l'entrée de la turbine libre des premier et deuxième moteurs 2, 3.

Dès lors, indépendamment de la variante mise en oeuvre si l'indicateur de première limitation 10 tombe en panne, à savoir si cet indicateur de première limitation 10 n'est plus en mesure d'afficher le paramètre limitant, on active un mode de pilotage assisté pour maintenir chaque paramètre de surveillance en dessous d'un seuil prédéterminé.

Dès lors sur un hélicoptère, on plafonne selon l'invention :
- les premier et deuxième régimes du générateur de gaz Ng respectivement à un premier et un deuxième régimes du générateur de gaz seuils Ng', Ng",
- les premier et deuxième couples moteur Tq respectivement à un premier et un deuxième couples moteur seuils Tq', Tq" et
- les première et deuxième températures d'éjection respectivement à une première et une deuxième températures d'éjection seuils T4', T4".

Ces seuils Ng', Ng", Tq', Tq", T4', T4" prédéterminés ont en outre des valeurs qui varient en fonction du régime moteur utilisé.

Par conséquent, dans ce mode de vol dégradé, le pilote n'a plus à se préoccuper de ses moteurs et peut consacrer son attention à d'autres travaux, la recherche d'un terrain où poser son aéronef par exemple.

Selon la variante de la figure 1, l'activation du mode de pilotage assisté est automatique.

Le dispositif d'aide au pilotage selon l'invention comporte l'indicateur de première limitation 10, les premier et deuxième organes de régulation 12, 13 des premier et deuxième moteurs 2, 3 ainsi qu'un organe de contrôle 21 lié d'une part aux premier et deuxième organes de régulation 12, 13 par des liaisons L1', L2' et, d'autre part, à l'indicateur de première limitation 10.

L'organe de contrôle 21 surveille alors le bon fonctionnement de l'indicateur de première limitation 10 via des procédures de tests usuels.

On note que l'on connaît un organe dénommé « CPDS » soit Central Panel Display System en langue Anglaise qui est à même de tester un indicateur de première limitation de type VEMD. Par exemple, l'organe CPDS vérifie que l'indicateur de première limitation reçoit toutes les informations lui permettant de déterminer le paramètre limitant.

Dès lors, si l'organe de contrôle 21 constate un dysfonctionnement de l'indicateur de première limitation, via l'absence de réception d'informations permettant de déterminer le paramètre limitant par exemple, cet organe de contrôle 21 active le mode de pilotage assisté.

L'organe de contrôle 21 ordonne alors aux premier et deuxième organes de régulation 12, 13 de plafonner les paramètres de surveillance des premier et deuxième moteurs 2, 3 aux seuils prédéterminés, en prenant en considération lesdits seuils dans les boucles de régulation ou en plafonnant la position des premier et deuxième doseurs carburant.

Contrairement à la pratique usuelle mise en oeuvre sur les aéronefs multi-moteurs et surtout sur les hélicoptères bimoteurs, on plafonne volontairement les performances des moteurs alors que ces moteurs fonctionnent correctement pour alléger la charge de travail du pilote dans un mode de vol dégradé.

L'activation du mode de pilotage assisté étant automatique, l'organe de contrôle 21 ordonne l'allumage d'un voyant 18 pour en avertir le pilote.

Par ailleurs, la figure 1 fait apparaître un unique organe de contrôle 21 distinct de l'indicateur de première limitation 10. Cependant, il est concevable d'intégrer l'organe de contrôle 21 dans l'indicateur de première limitation 10, cet organe de contrôle 21 comprenant éventuellement un microprocesseur dédié à l'activation du mode de pilotage assisté ou participant de plus à des opérations annexes.

En outre, il est possible d'implémenter plusieurs organes de contrôle, par exemple un organe de contrôle par organe de régulation 12, 13. Les agencements suivants et non limitatifs sont envisageables :
- un organe de contrôle surveille l'indicateur de première limitation et indique à l'autre organe de contrôle d'activer le mode de pilotage assisté,
- les deux organes de contrôle surveillent concomitamment l'indicateur de première limitation.

De plus, il est concevable d'intégrer chaque organe de contrôle dans l'organe de régulation associé, chaque organe de contrôle comprenant éventuellement un microprocesseur dédié à l'activation du mode de pilotage assisté ou participant de plus à des opérations annexes.

La figure 2 présente un schéma explicitant une variante manuelle de l'invention. Selon cette variante, le mode de pilotage assisté n'est pas activé automatiquement à l'insu du pilote mais manuellement et délibérément par ce pilote.

Dès lors, la figure 2 présente un dispositif d'aide au pilotage muni d'un premier et d'un deuxième organes de contrôle 22, 23 reliés par des liaisons L1', L2' respectivement aux premier et deuxième organes de régulation 12, 13. On note qu'évidemment chaque organe de contrôle peut être intégré dans l'organe de régulation associé, chaque organe de contrôle comprenant éventuellement un microprocesseur dédié à l'activation du mode de pilotage assisté ou participant de plus à des opérations annexes.

Ces premier et deuxième organes de contrôle 22, 23 sont liés à au moins un moyen de commande, tel qu'un bouton disposé en l'occurrence sur le levier de pas collectif 16.

Si le pilote constate un dysfonctionnement de son indicateur de première limitation 10, il utilise son moyen de commande pour que chaque organe de contrôle 22, 23 active le mode de pilotage assisté. Par mesure de sécurité, l'activation du mode de pilotage assisté est avantageusement effective si le pilote agit sur le moyen de commande pendant une durée minimale.

Ainsi, si par exemple le pilote appuie sur un bouton du moyen de commande pendant une durée inférieure à la durée minimale prédéterminée, l'organe de contrôle n'active pas le mode de pilotage assisté.

En outre, les premier et deuxième organes de contrôle 22, 23 reçoivent l'ordre provenant du moyen de commande. Les premier et deuxième organes de contrôle 22, 23 interrogent alors les premier et deuxième organes de régulation 12, 13 pour déterminer si les premier et deuxième moteurs 2, 3 fonctionnent.

Dans la négative, les premier et deuxième organes de contrôle 22, 23 en déduisent que le moyen de commande requiert la mise en place d'un régime d'urgence.

Par contre, dans l'affirmative, si les premier et deuxième moteurs 2, 3 fonctionnent correctement, les premier et deuxième organes de contrôle 22, 23 en déduisent que le mode de pilotage assisté doit être activé pour plafonner les paramètres de surveillance aux seuils prédéterminés correspondant au régime des moteurs en vigueur.

En référence à la figure 3, le dispositif d'aide au pilotage comporte un premier et un deuxième moyens de commande 31, 32 agencés sur un levier de pas collectif 30.

Avantageusement, l'aéronef étant un hélicoptère bimoteur, lorsqu'un moteur tombe en panne le premier régime d'urgence OEI30" est d'office enclenché. Le premier moyen de commande 31 permet alors de désengager ce premier régime d'urgence OEI30".

De plus, le deuxième moyen de commande 32 permet d'engager le deuxième régime d'urgence OEI2'.

Par suite, quand un moteur d'un hélicoptère bimoteur tombe en panne, les premier et deuxième moyens de commande pilotent classiquement les premier et deuxième régimes d'urgence OEI30", OEI2'.

Par contre, si les organes de contrôle 22, 23 activent le mode de pilotage assisté, ces organes de contrôle considèrent qu'un ordre donné par le premier moyen de commande 31 signifie qu'il convient de plafonner les paramètres de surveillance à leurs seuils prédéterminés pour un premier régime de fonctionnement normal à savoir le régime maximal continu PMC. De même, un ordre donné par le deuxième moyen de commande 32 signifie qu'il convient de plafonner les paramètres de surveillance à leurs seuils prédéterminés pour un deuxième régime de fonctionnement normal à savoir le régime de décollage PMD.

Bien que la figure 2 présente deux organes de contrôle 22, 23, on comprend qu'il est possible d'utiliser un unique organe de contrôle relié aux premier et deuxième organes de régulation, éventuellement intégré dans l'indicateur de première limitation.

Par ailleurs, indépendamment de la variante mise en oeuvre, le rotor de sustentation 50 étant animé d'une vitesse de rotation, on désactive le mode de pilotage assisté lorsque la vitesse de rotation passe en dessous d'une vitesse limite prédéterminée.

Ainsi, le ou les organes de contrôle n'exigent plus des organes de régulation qu'ils plafonnent les paramètres de surveillance pour permettre au pilote d'obtenir suffisamment de puissance afin de sortir d'une situation délicate.

De même, on désactive le mode de pilotage assisté lorsque le rotor de sustentation 50 subit une décélération supérieure à une décélération limite prédéterminée.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé d'aide au pilotage en cas de pannes d'un indicateur de première limitation (10) d'un aéronef pourvu d'au moins deux moteurs (2, 3) et d'une pluralité de paramètres de surveillance (Ng, T4, Tq) des moteurs (2, 3) dudit aéronef, ledit indicateur de première limitation (10) affichant une information relative à une valeur d'un paramètre limitant desdits moteurs (2, 3), le paramètre limitant étant le paramètre de surveillance (Ng, T4, Tq) des moteurs le plus proche de sa limite,
**caractérisé en ce que** l'on active un mode de pilotage assisté durant lequel on maintient chaque paramètre de surveillance (Ng, T4, Tq) en dessous d'un seuil prédéterminé lorsque ledit indicateur de première limitation (10) n'est plus à même d'afficher ladite information.

2. Procédé selon la revendication 1,
**caractérisé en ce que** lesdits moteurs (2, 3) étant des turbomoteurs munis d'une turbine libre et d'un générateur de gaz, lesdits paramètres de surveillance (Ng, T4, Tq) comprennent le régime du générateur de gaz (Ng) de chaque moteur (2, 3), le couple moteur (Tq) de chaque moteur (2, 3) et la température d'éjection des gaz (T4) à l'entrée de la turbine libre de chaque moteur (2, 3).

3. Procédé selon l'une quelconque des revendications précédentes,
**caractérisé en ce que** lesdits moteurs (2, 3) pouvant fonctionner selon une pluralité de régimes, on modifie ledit seuil en fonction du régime employé.

4. Procédé selon l'une quelconque des revendications précédentes,
**caractérisé en ce qu'**on maintient chaque paramètre de surveillance (Ng, T4, Tq) en dessous d'un seuil prédéterminé en plafonnant lesdits paramètres de surveillance (Ng, T4, Tq).

5. Procédé selon l'une quelconque des revendications précédentes,
**caractérisé en ce que** l'on maintient chaque paramètre de surveillance (Ng, T4, Tq) en dessous d'un seuil prédéterminé en plafonnant le débit de carburant alimentant lesdits moteurs (2, 3).

6. Procédé selon l'une quelconque des revendications précédentes,
**caractérisé en ce qu'**un pilote active ledit mode de pilotage assisté en requérant manuellement ledit mode de pilotage assisté pendant une durée minimale.

7. Procédé selon l'une quelconque des revendications 1 à 5,
**caractérisé en ce que** le fonctionnement dudit indicateur de première limitation (10) étant surveillé, on active automatiquement ledit mode de pilotage assisté lorsqu'une panne dudit indicateur de première limitation (10) est détectée.

8. Procédé selon l'une quelconque des revendications précédentes,
**caractérisé en ce qu'**on informe un pilote dudit aéronef lorsque ledit mode de pilotage assisté est activé.

9. Procédé selon l'une quelconque des revendications précédentes,
**caractérisé en ce que**, ledit aéronef étant un giravion muni d'au moins un rotor de sustentation (50) animé d'une vitesse de rotation, on désactive ledit mode de pilotage assisté lorsque ladite vitesse de rotation passe en dessous d'une vitesse limite prédéterminée.

10. Procédé selon la revendication 8,
**caractérisé en ce que** ledit aéronef étant un giravion muni d'au moins un rotor de sustentation (50) animé d'une vitesse de rotation, on désactive ledit mode de pilotage assisté lorsque ledit rotor de sustentation (50) subit une décélération supérieure à une décélération limite prédéterminée.

11. Dispositif d'aide au pilotage d'un giravion, apte à mettre en oeuvre le procédé selon l'un quelconque des revendications précédentes, ledit dispositif comportant au moins un indicateur de première limitation (10), au moins un organe de régulation (12, 13) d'au moins un premier et un deuxième moteurs (2, 3),
**caractérisé en ce qu'**il comporte au moins un organe de contrôle (21, 22, 23) apte à maintenir une pluralité de paramètres de surveillance (Ng, T4, Tq) desdits moteurs en dessous de seuils prédéterminés lorsque le mode de pilotage assisté selon la revendication 1 est activé.

12. Dispositif d'aide au pilotage selon la revendication 11,
**caractérisé en ce que** ledit giravion comportant un moyen de commande (31, 32) d'un régime d'urgence quand un moteur (2, 3) est en panne, lorsque les moteurs (2, 3) fonctionnent normalement ledit moyen de commande (31, 32) permet d'activer ledit mode de pilotage assisté durant lequel au moins un organe de contrôle (22, 23) maintient une pluralité de paramètre de surveillance (Ng, T4, Tq) desdits moteurs (2, 3) en dessous de seuils prédéterminés.

13. Dispositif d'aide au pilotage selon la revendication 11,
**caractérisé en ce que** ledit giravion comportant un premier moyen de commande (31) d'un premier régime d'urgence (OEI30") et un deuxième moyen de commande (32) d'un deuxième régime d'urgence (OEI2') quand un moteur (2, 3) est en panne, lorsque les moteurs (2, 3) fonctionnent normalement ledit premier moyen de commande (31) permet d'activer un mode de pilotage assisté durant lequel au moins un organe de contrôle (22, 23) maintient une pluralité de paramètres de surveillance (Ng, T4, Tq) desdits moteurs (2, 3) en dessous de premiers seuils prédéterminés pour un premier régime de fonctionnement normal (PMD) et ledit deuxième moyen de commande (32) permet d'activer un mode de pilotage assisté durant lequel au moins un organe de contrôle (22, 23) maintient une pluralité de paramètres de surveillance (Ng, T4, Tq) desdits moteurs (2, 3) en dessous de deuxièmes seuils prédéterminés pour un deuxième régime de fonctionnement normal (PMC).

14. Dispositif d'aide au pilotage selon l'un quelconque des revendications 11 à 13,
**caractérisé en ce que** ledit organe de contrôle est intégré audit organe de régulation (12, 13).

15. Dispositif d'aide au pilotage selon l'un quelconque des revendications 11 à 14,
**caractérisé en ce que** ledit organe de contrôle est intégré audit indicateur de première limitation (10).

## Claims

1. Method of assisting piloting in the event of a breakdown of a first limit indicator (10) of an aircraft provided with at least two engines (2, 3) and a plurality of monitoring parameters (Ng, T4, Tq) of the engines (2, 3) of said aircraft, said first limit indicator (10) displaying information relating to a value of a limiting parameter of said engines (2, 3), the limiting parameter being the engine monitoring parameter (Ng, T4, Tq) that is the closest to its limit,
**characterised in that** an assisted piloting mode is activated during which each monitoring parameter (Ng, T4, Tq) is maintained below a predetermined threshold when said first limit indicator (10) is no longer able to display said information.

2. Method according to Claim 1,
**characterised in that** said engines (2, 3) are turbine engines equipped with a free turbine and a gas generator, and said monitoring parameters (Ng, T4, Tq) comprise the gas generator speed (Ng) of each engine (2, 3), the engine torque (Tq) of each engine (2, 3), and the gas ejection temperature (T4) at the inlet to the free turbine of each engine (2, 3).

3. Method according to any one of the preceding claims,
**characterised in that** said engines (2, 3) are capable of operating at a plurality of ratings, and said threshold is modified as a function of the rating employed.

4. Method according to any one of the preceding claims,
**characterised in that** each monitoring parameter (Ng, T4, Tq) is maintained below a predetermined threshold by putting ceilings on said monitoring parameters (Ng, T4, Tq).

5. Method according to any one of the preceding claims,
**characterised in that** each monitoring parameter (Ng, T4, Tq) is maintained below a predetermined threshold by putting a ceiling on the rate at which fuel is fed to said engines (2, 3).

6. Method according to any one of the preceding claims,
**characterised in that** a pilot activates said assisted piloting mode by manually requesting said assisted piloting mode for a minimum duration.

7. Method according to any one of Claims 1 to 5,
**characterised in that** the operation of said first limit indicator (10) is monitored, and said assisted piloting mode is activated automatically when a breakdown of said first limit indicator (10) is detected.

8. Method according to any one of the preceding claims,
**characterised in that** a pilot of said aircraft is informed when said assisted piloting mode is activated.

9. Method according to any one of the preceding claims,
**characterised in that** said aircraft is a rotorcraft provided with at least one lift rotor (50) driven at a speed of rotation, and said assisted piloting mode is deactivated when said speed of rotation drops below a predetermined limit speed.

10. Method according to Claim 8,
**characterised in that** said aircraft is a rotorcraft provided with at least one lift rotor (50) driven at a speed of rotation, and said assisted piloting mode is deactivated when said lift rotor (50) is subjected to a deceleration greater than a predetermined limit deceleration.

11. Assisted piloting device for a rotorcraft, the device being suitable for implementing the method according to any one of the preceding claims, said device comprising at least one first limit indicator (10), and at least one regulator member (12, 13) of at least first and second engines (2, 3),
**characterised in that** the device comprises at least one control member (21, 22, 23) suitable for maintaining a plurality of monitoring parameters (Ng, T4, Tq) of said engines below predetermined thresholds when the assisted piloting mode according to Claim 1 is activated.

12. Assisted piloting device according to Claim 11,
**characterised in that** said rotorcraft comprises control means (31, 32) for commanding an emergency rating when an engine (2, 3) has broken down, and when the engines (2, 3) are operating normally, said control means (31, 32) enable said assisted piloting mode to be activated during which at least one control member (22, 23) maintains a plurality of monitoring parameters (Ng, T4, Tq) of said engines (2, 3) below predetermined thresholds.

13. Assisted piloting device according to Claim 11,
**characterised in that** said rotorcraft comprises first control means (31) for commanding a first emergency rating (OEI30") and second control means (32) for commanding a second emergency rating (OEI2') when an engine (2, 3) has broken down, and when the engines (2, 3) are operating normally, said first control means (31) enable an assisted piloting mode to be activated during which at least one control member (22, 23) maintains a plurality of monitoring parameters (Ng, T4, Tq) of said engines (2, 3) below predetermined first thresholds for a first normal operation rating (PMD), and said second control means (32) enable an assisted piloting mode to be activated during which at least one control member (22, 23) maintains a plurality of monitoring parameters (Ng, T4, Tq) of said engines (2, 3) below second predetermined thresholds for a second normal operation rating (PMC).

14. Assisted piloting device according to any one of Claims 11 to 13,
**characterised in that** said control member is incorporated in said regulator member (12, 13).

15. Assisted piloting device according to any one of Claims 11 to 14,
**characterised in that** said control member is incorporated in said first limit indicator (10).

## Patentansprüche

1. Verfahren zur Steuerungshilfe eines Flugzeugs mit mindestens zwei Motoren (2, 3) im Fall einer Störung eines Instruments (10) zur Anzeige einer ersten Begrenzung und einer Mehrzahl von Überwachungsparametern (Ng, T4, Tq) der Motoren (2, 3) des Flugzeugs, wobei das Instrument (10) zur Anzeige einer ersten Begrenzung eine Information bezüglich eines Werts eines Parameters anzeigt, der die Motoren (2, 3) begrenzt, wobei der begrenzende Parameter der Überwachungsparameter (Ng, T4, Tq) der Motoren ist, der am nächsten an seinem Grenzwert liegt,
**dadurch gekennzeichnet, dass** ein Modus unterstützter Steuerung aktiviert wird, während dem jeder Überwachungsparameter (Nb, T4, Tq) unterhalb eines vorgegebenen Schwellenwerts gehalten wird, wenn das Instrument (10) zur Anzeige einer ersten Begrenzung diese Information nicht mehr anzeigen kann.

2. Verfahren nach Anspruch 1,
**dadurch gekennzeichnet, dass** die Motoren (2, 3) Turbomotoren sind mit einer freien Nutzturbine und einem Gasgenerator, wobei die Überwachungsparameter (Ng, T4, Tq) die Betriebsart des Gasgenerators (Ng) jedes Motors (2, 3), das Motordrehmoment (Tq) jedes Motors (2, 3) und die Gasausstoßtemperatur (T4) am Eingang der freien Nutzturbine eines jeden Motors (2, 3) umfassen.

3. Verfahren nach einem der vorstehenden Ansprüche,
**dadurch gekennzeichnet, dass** die Motoren (2, 3) in einer Mehrzahl von Betriebsarten arbeiten können, und der Schwellenwert in Abhängigkeit von der angewandten Betriebsart verändert wird.

4. Verfahren nach einem der vorstehenden Ansprüche,
**dadurch gekennzeichnet, dass** jeder Überwachungsparameter (Ng, T4, Tq) unterhalb eines vorbestimmten Schwellenwertes gehalten wird, indem die Überwachungsparameter (Ng, T4, Tq) begrenzt werden.

5. Verfahren nach einem der vorstehenden Ansprüche,
**dadurch gekennzeichnet, dass** jeder Überwachungsparameter (Ng, T4, Tq) unterhalb eines vorbestimmten Schwellenwertes gehalten wird, indem der Durchsatz des Treibstoffs, mit dem die Motoren (2, 3) versorgt werden, begrenzt wird.

6. Verfahren nach einem der vorstehenden Ansprüche,
**dadurch gekennzeichnet, dass** ein Pilot den unterstützten Steuerungsmodus aktiviert, indem er manuell während einer minimalen Zeitdauer den unterstützten Steuerungsmodus anfordert.

7. Verfahren nach einem der Ansprüche 1 bis 5,
**dadurch gekennzeichnet, dass**, wenn das Funktionieren des Instruments (10) zur Anzeige einer ersten Begrenzung überwacht wird, man automatisch den unterstützten Steuerungsmodus aktiviert, wenn eine Panne des Instruments (10) zur Anzeige einer ersten Begrenzung erfasst wird.

8. Verfahren nach einem der vorstehenden Ansprüche,
**dadurch gekennzeichnet, dass** ein Pilot des Flugzeugs informiert wird, wenn der unterstützte Steuerungsmodus aktiviert ist.

9. Verfahren nach einem der vorstehenden Ansprüche,
**dadurch gekennzeichnet, dass** das Flugzeug ein Drehflügelflugzeug ist mit mindestens einem Auftriebsrotor (50), der auf eine Drehgeschwindigkeit gebracht wird, wobei der Modus einer unterstützten Steuerung deaktiviert wird, wenn die Drehgeschwindigkeit unter eine vorbestimmte Grenzgeschwindigkeit sinkt.

10. Verfahren nach Anspruch 8, **dadurch gekennzeichnet, dass** das Flugzeug ein Drehflügelflugzeug ist, mit mindestens einem Auftriebsrotor (50), der auf eine Drehgeschwindigkeit gebracht wird, wobei man den Modus unterstützter Steuerung deaktiviert, wenn der Auftriebsrotor (50) eine Abbremsung erfährt, die größer ist als eine vorbestimmte Grenzabbremsung.

11. Vorrichtung zur Steuerungshilfe eines Drehflügelflugzeugs, mit der das Verfahren nach einem der vorstehenden Ansprüche ausgeführt werden kann, wobei die Vorrichtung mindestens ein Instrument (10) zur Anzeige einer ersten Begrenzung, mindestens ein Regelorgan (12, 13) mindestens eines ersten und eines zweiten Motors (2, 3) aufweist,
**gekennzeichnet durch** mindestens ein Steuerorgan (21, 22, 23), welches eine Mehrzahl von Überwachungsparametern (Ng, T4, Tq) der Motoren unterhalb von vorbestimmten Schwellenwerten halten kann, wenn der erfindungsgemäße unterstützte Steuerungsmodus aktiviert ist.

12. Vorrichtung zur Steuerungshilfe nach Anspruch 11,
**dadurch gekennzeichnet, dass** das Drehflügelflugzeug ein Steuermittel (31, 32) für einen Notbetrieb aufweist, wenn ein Motor (2, 3) defekt ist, wobei, während die Motoren (2, 3) normal funktionieren, das Steuermittel (31, 32) es ermöglicht, den unterstützten Steuerungsmodus zu aktivieren, während dem mindestens ein Steuerorgan (22, 23) eine Mehrzahl von Überwachungsparametern (Ng, T4, Tq) der Motoren (2, 3) unterhalb von vorbestimmten Schwellenwerten hält.

13. Vorrichtung zur Steuerungshilfe nach Anspruch 11,
**dadurch gekennzeichnet, dass** das Drehflügelflugzeug ein erstes Steuermittel (31) für einen ersten Notbetrieb (OEI30") und ein zweites Steuermittel (32) für einen zweiten Notbetrieb (OEI2') aufweist, wenn ein Motor (2, 3) defekt ist, wobei, während die Motoren (2, 3) normal funktionieren, das erste Steuermittel (31) es erlaubt, einen unterstützten Steuerungmodus zu aktivieren, während dem mindestens ein Steuerorgan (22, 23) eine Mehrzahl von Überwachungsparametern (Ng, T4, Tq) der Motoren (2, 3) unterhalb erster vorbestimmter Schwellenwerte hält für einen ersten normalen Betriebsmodus (PMD), und wobei das zweite Steuermittel (32) es erlaubt, einen unterstützten Steuerungsmodus zu aktivieren, während dem mindestens ein Steuerorgan (22, 23) eine Mehrzahl von Überwachungsparametern (Ng, T4, Tq) der Motoren (2, 3) unterhalb von zweiten vorbestimmten Schwellenwerten hält für einen zweiten normalen Betriebsmodus (PMC).

14. Vorrichtung zur Steuerungshilfe nach einem der Ansprüche 11 bis 13,
**dadurch gekennzeichnet, dass** das Steuerorgan in das Regelorgan (12, 13) integriert ist.

15. Vorrichtung zur Steuerungshilfe nach einem der Ansprüche 11 bis 14,
**dadurch gekennzeichnet, dass** das Steuerorgan in das Instrument (10) zur Anzeige einer ersten Begrenzung integriert ist.
